# FASCICULE DE BREVET EUROPEEN

(11) **EP 3 657 213 B1**
(45) Date de publication et mention de la délivrance du brevet: **09.03.2022**
(21) Numéro de dépôt: 19209738.4
(22) Date de dépôt: 18.11.2019
(51) Int. Cl.: G01S 13/91, G01S 13/90, G01S 13/42, G08G 5/02, G01S 7/40

(54) **PROCEDE D'APPRENTISSAGE D'UN RESEAU DE NEURONES EMBARQUE DANS UN AERONEF POUR L'AIDE A L'ATTERRISSAGE DUDIT AERONEF ET SERVEUR POUR LA MISE EN OEUVRE D'UN TEL PROCEDE**
LERNVERFAHREN EINES NEURONENNETZES AN BORD EINES LUFTFAHRZEUGS FÜR DIE LANDEHILFE DIESES LUFTFAHRZEUGS, UND SERVER FÜR DIE UMSETZUNG EINES SOLCHEN VERFAHRENS
LEARNING METHOD OF A NEURAL NETWORK ON-BOARD AN AIRCRAFT FOR LANDING ASSISTANCE OF SAID AIRCRAFT AND SERVER FOR IMPLEMENTING SUCH A METHOD

(30) Priorité: 22.11.2018 FR 1871698
(43) Date de publication de la demande: 27.05.2020
(73) Titulaire: Thales, 92400 Courbevoie (FR)
(72) Inventeur: VEYRAC, Yoan, 33701 Merignac (FR); GARREC, Patrick, 33701 Merignac (FR); CORNIC, Pascal, 29238 Brest (FR)
(74) Mandataire: Marks & Clerk France

(56) Documents cités:
- US-A- 6 018 698
- US-A1- 2018 024 237
- KORN B ET AL: "Enhanced and synthetic vision: increasing pilot's situation awareness under adverse weather conditions", 21TH. DASC. THE 21TH. DIGITAL AVIONICS SYSTEMS CONFERENCE PROCEEDINGS. IRVINE, CA, OCT. 27 - 31, 2002; [DIGITAL AVIONICS SYSTEMS CONFERENCE], NEW YORK, NY : IEEE, US, vol. 2, 27 octobre 2002 (2002-10-27), pages 645-654, XP010616241, ISBN: 978-0-7803-7367-9

## Description

La présente invention concerne un procédé d'apprentissage d'un réseau de neurones embarqué dans un aéronef pour l'aide à l'atterrissage dudit aéronef. L'invention concerne également un serveur pour la mise en œuvre d'un tel procédé.

Le domaine technique de l'invention est celui de la détection et de la reconnaissance d'un environnement relativement à la position d'un observateur. Le domaine d'exploitation principal est celui du radar, pour des applications d'aide à l'atterrissage. Cette invention vise plus précisément les systèmes d'aide à l'atterrissage « EVS » (Enhanced Vision System). L'invention pourrait s'appliquer à d'autres senseurs (par exemple optiques ou électro-optiques).

L'invention adresse notamment le problème de l'aide à l'atterrissage d'aéronefs sur une piste d'atterrissage, par conditions de visibilité réduite, en particulier à cause de conditions météorologiques difficiles, par exemple en cas de brouillard. Les normes imposent des règles d'obtention de visibilité pendant la phase d'atterrissage. Ces règles se traduisent par des seuils de décision qui se réfèrent à l'altitude de l'avion lors de sa phase de descente. A chacun de ces seuils, des repères visuels identifiés doivent être obtenus pour poursuivre la manœuvre d'atterrissage, sans quoi elle doit être abandonnée. Les manœuvres d'atterrissage abandonnées représentent un réel problème pour la gestion du trafic aérien et pour la planification des vols. Il faut estimer avant le décollage la capacité à pouvoir atterrir à destination sur la base de prévisions météorologiques, plus ou moins fiables, et le cas échéant prévoir des solutions de repli.

Le problème de l'atterrissage des aéronefs par conditions de visibilité réduite a fait l'objet du développement de plusieurs techniques qui sont actuellement utilisées.

L'une de ces techniques est le système d'atterrissage aux instruments (Instrument Landing System, ILS). Le système ILS repose sur un équipement radiofréquence installé au sol, au niveau de la piste d'atterrissage, et un instrument compatible placé à bord de l'aéronef. L'utilisation d'un tel système de guidage requiert des équipements onéreux et une qualification spécifique des pilotes. Il ne peut par ailleurs pas être installé sur tous les aéroports. Il nécessite une maintenance par des avions servant à étalonner le système. Ce système n'est pas généralisé et il est en phase de retrait d'exploitation.

Une autre alternative est l'aide à l'atterrissage par GPS. Bien qu'ayant une précision suffisante, la fiabilité de cette solution est trop faible puisqu'elle peut facilement - intentionnellement ou non - être sujette au brouillage. Son intégrité n'est pas garantie.

Enfin, une technique de vision augmentée est également employée (Enhanced Vision System, EVS). Le principe est d'utiliser des senseurs plus performants que l'œil du pilote par conditions météorologiques dégradées, et d'incruster les informations collectées dans le champ de vision du pilote, au moyen d'un affichage tête haute ou sur la visière d'un casque porté par le pilote. Cette technique repose essentiellement sur l'emploi de capteurs pour détecter le rayonnement des lampes disposées le long de la piste et sur la rampe d'approche. Les lampes à incandescence produisent de la lumière visible mais elles émettent aussi dans le domaine infrarouge. Des capteurs dans le domaine infrarouge permettent de détecter ces rayonnements et la portée de détection est meilleure que celle de l'être humain dans le domaine visible, lors de conditions météorologiques dégradées. Une amélioration de la visibilité permet donc dans une certaine mesure d'améliorer les phases d'approche et de limiter les approches abandonnées. Toutefois, cette technique repose sur le rayonnement infrarouge parasite des lampes présentes au voisinage de la piste. Pour des soucis de durabilité des lampes, la tendance actuelle est au remplacement des lampes à incandescence par les lampes à LED. Ces dernières ont un spectre moins étendu dans le domaine infrarouge. Un effet collatéral est donc de provoquer une obsolescence technique des systèmes EVS à base de capteurs infrarouges.

Une alternative aux senseurs infrarouges est l'obtention d'images par un senseur radar, en bande centimétrique ou millimétrique. Certaines bandes de fréquence choisies en dehors des pics d'absorption de la vapeur d'eau présentent une sensibilité très faible aux conditions météorologiques difficiles. De tels senseurs permettent donc de produire une image au travers de brouillard par exemple. Cependant, même si ces capteurs ont une résolution en distance fine, ils présentent une résolution angulaire bien plus grossière que les solutions optiques. La résolution est directement liée à la taille des antennes utilisées, et elle est souvent trop grossière pour obtenir un positionnement précis de la piste d'atterrissage à une distance suffisante pour effectuer les manœuvres de recalage.

Il existe donc un besoin de nouvelles solutions techniques permettant de guider la manœuvre d'approche en vue d'un atterrissage par conditions de visibilité réduite.

Un document US 6 018 898 A divulgue un système d'aide à l'atterrissage apte à utiliser un réseau de neurones. Un document US 2018/024237 A1 divulgue une méthode pour déterminer la position d'un aéronef en phase d'atterrissage.

Un but de l'invention est notamment de permettre un tel guidage par conditions de visibilité réduite. A cet effet l'invention a pour objet un procédé d'apprentissage d'un réseau de neurones embarqué dans un aéronef pour l'aide à l'atterrissage dudit aéronef sur au moins une piste donnée, ledit réseau de neurones positionnant ledit aéronef par rapport à la piste, ledit procédé utilisant une flotte d'aéronefs étant équipé au moins d'un senseur radar et comportant au moins :
- Une étape de collecte collective d'images radar par un ensemble d'aéronefs de ladite flotte, lesdites images radar étant obtenues par les senseurs radar desdits aéronefs en phases d'atterrissage nominales sur ladite piste, étape dans laquelle chaque image collectée par un aéronef est étiquetée avec au moins une information de position de ladite piste par rapport audit aéronef, ladite image étiquetée étant envoyée vers une base de données partagée et stockée dans ladite base de données ;
- Une étape d'apprentissage par un réseau de neurones de ladite piste à partir des images étiquetées stockées dans ladite base de données partagée, en fin de ladite étape ledit réseau de neurone étant entraîné ;
- Une étape d'envoi dudit réseau de neurones entraîné vers au moins un desdits aéronefs.

Dans un mode de mise en œuvre particulier, ledit réseau de neurones transmet à un moyen d'affichage et/ou de commande la trajectoire dudit aéronef.

Ladite base de données comporte par exemple des images radar étiquetées propres à plusieurs pistes d'atterrissage, les images étiquetées comportant identification de la piste imagée.

Chaque image étiquetée comporte par exemple l'identification de l'aéronef ayant émis ladite image.

Dans un mode de mise en œuvre particulier :
- les images radar étant entachées d'un biais propre à l'installation dudit senseur radar sur chaque aéronef, ledit biais est estimé pour chaque image radar avant son stockage dans ladite base de données, le biais estimé étant stocké avec ladite image ;
- le réseau de neurones entraîné étant transmis à un aéronef donné avec le biais estimé propre à cet aéronef.

L'estimation dudit biais pour un aéronef donné et pour une piste donnée est par exemple réalisée par comparaison entre au moins une image radar obtenue par le senseur radar équipant ledit aéronef et une image de référence de ladite piste et de son environnement. Ladite image de référence est par exemple constituée par un modèle numérique de terrain.

Les moyens de transmission desdites images étiquetées entre un aéronef et ladite base de données se font par exemple au moyen du senseur radar équipant ledit aéronef, les transmissions étant réalisées par modulation des données formant lesdites images sur l'onde radar.

Dans un mode de mise en œuvre particulier, un aéronef porteur dudit senseur radar, l'étiquetage desdites images comporte au moins l'une des indications suivantes :
- Date d'acquisition de l'image relativement au moment du toucher dudit porteur sur les pistes ;
- Localisation dudit porteur au moment de la prise d'image :
   * Absolue : position GPS ;
   *Relative par rapport à la piste : centrale inertielle ;
- Altitude dudit porteur ;
- Attitude dudit porteur ;
- Vecteur vitesse dudit porteur (obtenu par ledit senseur radar en fonction de sa vitesse par rapport au sol) ;
- Vecteur accélération dudit porteur (obtenu par ledit senseur radar en fonction de sa vitesse par rapport au sol) ;
- Position, relativement audit porteur, de la piste et de structures de référence obtenue par des moyens optiques à localisation précise.

Ladite base de données est par exemple mise à jour tout au long des atterrissages nominaux effectués par lesdits aéronefs sur au moins ladite piste.

L'invention a également pour objet un serveur comportant une base de données pour l'apprentissage d'un réseau de neurones embarqué pour la mise en œuvre du procédé tel que décrit précédemment, ledit serveur étant apte à communiquer avec des aéronefs. Ledit réseau de neurones est par exemple entraîné dans ledit serveur, le réseau entraîné étant transmis à au moins un desdits aéronefs.

D'autres caractéristiques et avantages de l'invention apparaîtront à l'aide de la description qui suit, faite en regard de dessins annexés qui représentent :
[Fig.1] La figure 1, un exemple de réalisation d'un dispositif d'aide à l'atterrissage utilisé par le procédé selon l'invention ;
[Fig.2] La figure 2, une illustration d'une phase d'atterrissage opérationnelle effectuée à l'aide du dispositif de la figure 1 ;
[Fig.3] La figure 3, une représentation d'un réseau de neurones permettant le positionnement d'un porteur par rapport à une piste donnée à partir d'une séquence d'images radar ;
[Fig.4] La figure 4, une illustration du principe d'apprentissage collectif selon l'invention ;
[Fig.5] La figure 5, une chaîne d'exploitation des données d'apprentissage et de restitution de réseaux de neurones entrainés, dans la mise en œuvre de l'invention ;
[Fig.6] La figure 6, une représentation d'un exemple d'estimation d'un biais lié à un aéronef.

Pour guider un aéronef à rallier une piste, l'invention combine avantageusement un senseur radar, très peu sensible aux conditions météorologiques, et un réseau de neurones, tous deux embarqués dans l'aéronef. Ce réseau de neurones partage une base d'apprentissage d'images radar avec des réseaux de neurones d'autres aéronefs, cette base étant mise à jour collectivement par ces aéronefs par un flux d'images radar prises en phases d'atterrissage. L'utilisation de l'environnement complet d'un aéroport et de la piste d'atterrissage permet un positionnement précis grâce au réseau de neurones embarqué, et entraîné sur plusieurs atterrissages.

On commence par décrire la partie du système d'aide à l'atterrissage pour guider un aéronef. La description est faite pour rallier une piste donnée.

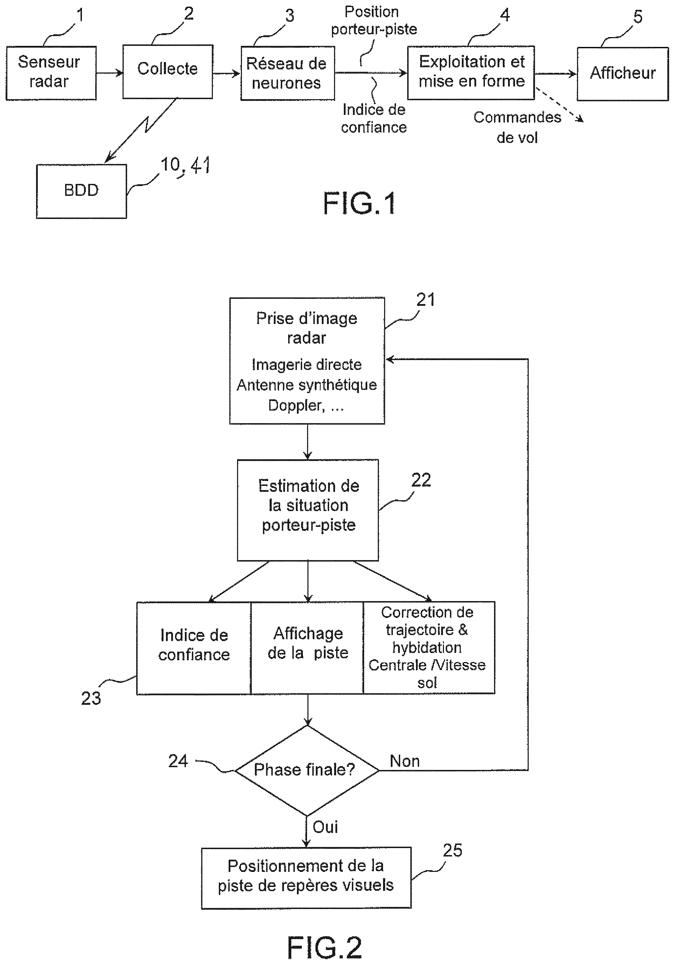

La figure 1 présente, conformément à l'invention, un dispositif d'aide à l'atterrissage d'un aéronef par détection et positionnement de la piste d'atterrissage par rapport à cet aéronef. Il comporte au moins :
- Un senseur radar 1 porté par ledit aéronef, ayant pour fonction notamment d'obtenir des images radar des pistes d'atterrissage ;
- Un bloc fonctionnel 2 de collecte d'images radar embarqué, effectuant au moins l'étiquetage et le stockage d'images radar obtenues par le senseur 1, les images stockées étant ensuite transmises à une base de données 10 partagée avec d'autres aéronefs comme cela sera décrit par la suite ;
- Un bloc fonctionnel 3 comportant un réseau de neurones, embarqué dans l'aéronef, le réseau de neurones étant entraîné à partir de la collecte d'images radar, c'est-à-dire à partir des images radar obtenues lors d'atterrissages nominaux (par temps clair) et dont la fonction est d'estimer la position de la piste d'atterrissage par rapport au porteur grâce aux images radar obtenues en temps réel par le senseur radar 1 (c'est-à-dire obtenues lors de l'atterrissage en cours), ces images étant stockées dans une base données associée au système 2 de collecte ;
- Un autre bloc fonctionnel 4, également embarqué, effectuant l'exploitation et la mise en forme des données issues du réseau de neurones permettant de formater ces données dans une interface adaptée, cette interface pouvant permettre l'affichage de la piste ou des symboles la représentant, voire de fournir des commandes de vol permettant de rallier la trajectoire d'atterrissage nominale.

Le dispositif comprend par exemple un système 5 d'affichage de la piste, de repères visuels et de données de navigations pertinents intégrées dans le champ de vision du pilote via un système de visualisation tête haute (HUD) ou un casque, tout autre système de visualisation étant possible.

Le bloc de collecte, le réseau de neurones et le bloc 4 d'exploitation des données sont par exemple intégrés dans le calculateur de vol de l'aéronef.

Une fois étiquetées, les images radar sont utilisées par le réseau de neurones 3 comme cela sera décrit par la suite. Elles servent à entraîner celui-ci. Plus précisément, le réseau de neurones effectue l'apprentissage de la piste d'atterrissage à partir de toutes les images stockées et étiquetées dans la base d'apprentissage. Une fois entraîné, le réseau de neurones 3 est capable à partir d'une série d'images radar de positionner la piste et son environnement par rapport au porteur, plus particulièrement de positionner le point d'atterrissage. Les images en entrée du réseau de neurones sont les images prises par le radar 1 dans la phase d'atterrissage en cours.

Il est alors possible, pour le bloc fonctionnel 4, d'estimer et de corriger l'écart de la trajectoire correspondante (trajectoire du porteur dans l'atterrissage en cours) par rapport à une trajectoire d'atterrissage nominale. Il est aussi possible d'afficher la piste dans le champ de vision du pilote au moyen du système d'affichage 5.

Le senseur radar 1 fonctionne par exemple en bande centimétrique ou en bande millimétrique, il permet de positionner le porteur par rapport à une piste d'atterrissage sur laquelle ce dernier souhaite atterrir, indépendamment des conditions de visibilité du pilote. Les images radar obtenues peuvent être des images radar directes ou des images de type SAR (« Synthetic Aperture Radar »). Ces dernières permettent d'affiner la précision angulaire tout en bénéficiant du changement d'angle de vue du déplacement du porteur.

Les images radar sont obtenues par le senseur radar 1 à chaque phase d'atterrissage, ce qui permet d'enrichir continûment la base de données d'images radar. Comme indiqué précédemment, l'acquisition de ces données radar est effectuée lors de manœuvres d'atterrissage nominales, par temps clair, de jour ou de nuit. Cette acquisition est aussi faite dans différentes conditions possibles d'aérologie et de manœuvre (différents types de vents, différentes arrivées de travers, différentes pentes d'approches), l'information de toutes ces conditions étant contenues dans l'étiquetage des images. Une fois l'atterrissage terminé, les données radar obtenues lors de la phase d'atterrissage sont enregistrées dans la base de données et étiquetées comme faisant partie d'une manœuvre d'atterrissage nominale. L'étiquetage comporte au moins cette information d'atterrissage nominale, mais il peut avantageusement être étendu aux informations additionnelles suivantes, en fonction de la disponibilité sur le porteur :
- Date d'acquisition de l'image relativement au moment du toucher des roues du porteur sur les pistes ;
- Localisation du porteur au moment de la prise d'image :
   Absolue : position GPS ;
   * Relative par rapport à la piste : centrale inertielle ;
- Altitude du porteur ;
- Attitude du porteur ;
- Vecteur vitesse du porteur (obtenu par le radar 1 en fonction de sa vitesse par rapport au sol) ;
- Vecteur accélération du porteur (obtenu par le radar 1 en fonction de sa vitesse par rapport au sol) ;
- Position, relativement au porteur, de la piste et de structures de référence obtenue par des moyens optiques à localisation précise.

La figure 2 illustre le procédé de fonctionnement opérationnel mis en œuvre par le dispositif illustré par la figure 1 pour l'aide à l'atterrissage d'un aéronef. Ce procédé comporte les étapes décrites ci-après en regard de la figure 2, pour une piste d'atterrissage donnée.

Deux étapes préliminaires non représentées concernent la collecte des images et l'apprentissage de la piste à partir des images collectées.

Une première étape 21 réalise la prise d'une première série d'images radar, ces images étant des images radar ou des images SAR obtenues par le senseur radar 1 embarqué sur l'aéronef. Chaque image radar est étiquetée conformément aux images déjà enregistrées dans le système de collecte 2.

Dans la deuxième étape 22, la situation du porteur par rapport à la piste et à son environnement est estimée au moyen du réseau de neurones, à partir de la série d'images radar obtenues. Il est possible de prévoir une série constituée d'une seule image radar, l'estimation pouvant être réalisée à partir d'une seule image.

Dans une troisième étape 23, on exploite l'estimation fournie par le réseau de neurones 3, cette exploitation étant réalisée à l'aide bloc fonctionnel 4 par exemple. Ce dernier fournit les données mises en forme pour l'affichage (effectué par le système d'affichage 5) et pour fournir les commandes de vol permettant de corriger la trajectoire. Il permet également de présenter sous une forme exploitable l'indicateur de confiance calculé par le réseau de neurones.

A la fin de cette troisième étape 24, si l'avion n'est pas en phase finale d'atterrissage (c'est-à-dire au point de rallier la piste d'atterrissage), le procédé reboucle sur la première étape 21 où l'on obtient une nouvelle série d'images radar. Dans le cas contraire, si l'avion est en phase finale d'atterrissage on parvient 25 au positionnement final de l'aéronef par rapport à la piste avec la trajectoire d'atterrissage définitive.

La méthode d'atterrissage utilisée par l'invention repose donc sur l'apprentissage de la séquence d'atterrissage et des images radar associées. Cette méthode nécessite des données d'apprentissages (les images radar étiquetées) pour fonctionner convenablement. En particulier, la précision du positionnement dépend du nombre de données d'apprentissage disponibles, et mises à jour.

Le procédé selon l'invention utilise plusieurs aéronefs équipés chacun du même dispositif d'aide à l'atterrissage que celui décrit relativement aux figures 1 et 2. Le senseur radar 1 permet de prendre des images de l'environnement de la piste et de positionner le porteur (position, vitesse et altitude) par rapport à la piste grâce à ces images au moyen du réseau de neurones 3.

Cela nécessite une étape d'apprentissage préalable, lors de laquelle les images radar obtenues pendant des phases d'atterrissage nominales sont étiquetées avec les données disponibles au cours de l'atterrissage, telles que décrites précédemment. Ces images étiquetées servent à entrainer le réseau de neurones du dispositif d'aide à l'atterrissage. Une fois entraîné, le réseau de neurones permet, à l'aide des images obtenues lors d'un atterrissage en conditions de visibilité réduite, d'obtenir le positionnement relatif du porteur par rapport à la piste. Le fonctionnement opérationnel a été décrit en regard de la figure 2. La précision de ce positionnement dépend de la qualité de l'apprentissage réalisé, et notamment du nombre d'images disponibles pour cet apprentissage. Plus ce nombre est élevé, meilleure est la qualité d'apprentissage. Selon l'invention, la base de données d'images radar 10 est enrichie collectivement par plusieurs aéronefs. Plus précisément, pour une piste d'atterrissage donnée, cette base est enrichie par les images obtenues pendant les phases d'atterrissage de plusieurs aéronefs. Une même base peut contenir les images propres à plusieurs pistes.

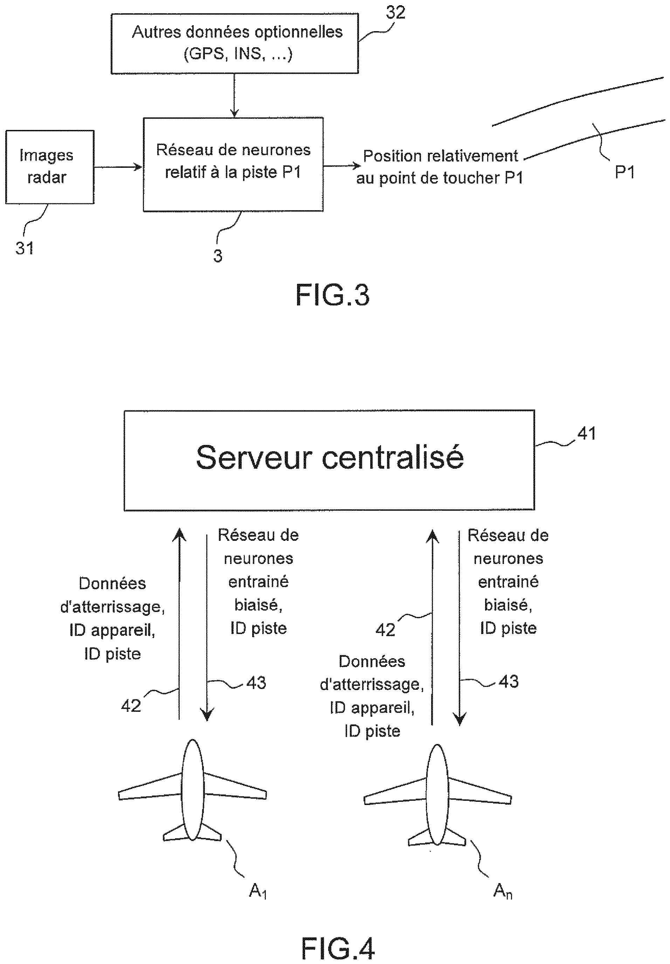

La figure 3 représente un réseau de neurones permettant le positionnement du porteur par rapport à une piste P1 à partir d'une séquence d'images radar. Plus particulièrement, la figure 3 présente les entrées et sorties de ce réseau de neurones 3 lors de son utilisation pendant un atterrissage sur cette piste P1.

Ce réseau prend en entrée des images radar 31, et optionnellement des données 32 provenant de capteurs complémentaires, telles que GPS par exemple. Grâce à ces données, le réseau de neurone établit le positionnement du porteur par rapport à la piste. Ce positionnement inclut l'attitude du porteur. Il peut être enrichi de sa vitesse et du point de toucher des roues estimé.

La figure 4 illustre plus particulièrement le procédé selon l'invention. L'invention propose un procédé d'apprentissage collectif permettant à chaque dispositif d'aide à l'atterrissage embarqué de disposer d'une base de référence solide, éprouvée et tenue à jour pour au moins une piste d'atterrissage où le porteur est amené à se poser. Cette base de référence peut avantageusement comporter les données d'apprentissage de plusieurs pistes.

Le procédé selon l'invention utilise une flotte de N aéronefs A1, ... AN équipés chacun d'un dispositif d'aide à l'atterrissage selon la figure 1. A chaque phase d'atterrissage, chaque dispositif envoie 42 les données d'atterrissage, dont les images étiquetées, vers un serveur centralisé 41, par exemple situé au sol, ce serveur contenant la base de données 10. En même temps que les images étiquetées, le dispositif envoie un identifiant de l'aéronef A1, ... AN et un identifiant de la piste d'atterrissage. La transmission de ces données se fait au moyen d'un système de communication adapté.

Ce moyen de communication peut être intégré au senseur radar 1 de chaque dispositif embarqué, les transmissions de données étant effectuées par modulation des données sur l'onde radar. En d'autres termes, la modulation de l'onde radar émise code les données transmises.

Ce serveur utilise ces données étiquetées afin d'entraîner des réseaux de neurones associés respectivement aux pistes correspondantes. L'entraînement (ou apprentissage) des réseaux de neurones se fait à partir des données mémorisées dans le serveur 41, l'apprentissage consistant notamment à apprendre au moins une trajectoire d'atterrissage sur la piste identifiée.

Le serveur envoie 43 vers les différents aéronefs les réseaux de neurones entraînés (formant le bloc fonctionnel 3 dans chaque dispositif d'aide à l'atterrissage).

Plus précisément dans cette étape d'envoi 43 d'un réseau de neurones entraîné vers un aéronef, le réseau de neurones est transmis à un moyen pour commander la trajectoire de cet aéronef, ce moyen étant typiquement le bloc fonctionnel 3 puis le bloc de mise en forme et d'exploitation 4 dont les fonctionnements ont été décrits précédemment. Ce moyen pour commander permettant l'affichage de la trajectoire pour l'aide au pilotage ou permettant directement de commander et corriger la trajectoire de l'aéronef.

Etant donné que les différents senseurs radar 1 peuvent présenter un biais, notamment au niveau du plan de pose à l'installation dans l'aéronef, il est prévu selon l'invention de compenser ces différents biais.

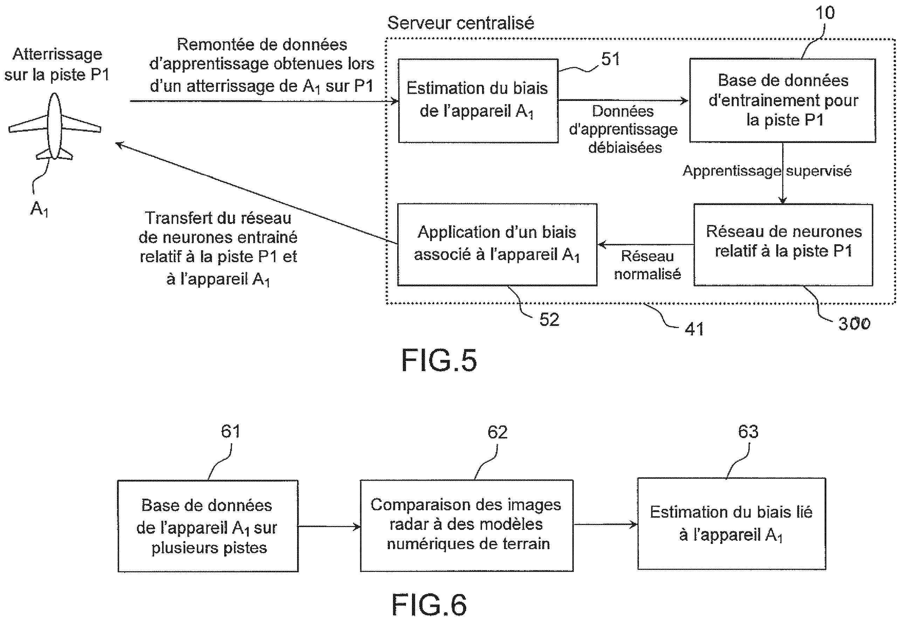

La figure 5 illustre l'apprentissage du réseau de neurones correspondant à une piste P1, en prenant en compte le biais lié à un aéronef A1. Les données d'apprentissage en provenance de l'aéronef A1 après un atterrissage sur la piste P1 sont renvoyées vers le serveur centralisé 41. Le biais lié à l'appareil A1 est estimé par un moyen de traitement 51 implanté dans le serveur 41. Cette estimation de biais 51 est effectuée avant que les données intègrent la base de données 10 d'apprentissage de la piste P1. Cette étape permet de normaliser les données issues des différents aéronefs et de faire converger efficacement l'apprentissage du réseau de neurones associé à cette piste P1 implémenté dans un module 300. Le réseau entrainé et normalisé est alors transmis aux différents aéronefs, après application 52 d'un biais correctif relatif à chaque aéronef.

Avec ce réseau de neurones, chaque appareil dispose d'une fonction d'aide à l'atterrissage sur une base de données étendue qui offre avantageusement une bonne précision grâce à la mise en commun des données.

La figure 6 illustre un exemple d'estimation du biais lié à chaque aéronef. D'autres méthodes peuvent être utilisées.

Dans l'exemple de la figure 4, les données d'atterrissage (images radar étiquetées) envoyées par l'aéronef A1 relatives aux atterrissages sur les différentes pistes utilisées sont agrégées dans une mémoire 61. Ces images radar sont comparées 62 à des images de référence, chacune de ces images de référence étant propre à une piste et à son environnement. Ces images incluent par exemple des constructions et des infrastructures. Les images de référence sont par exemple des modèles numériques de terrain (MNT), et peuvent être des modèles numériques d'élévation lorsqu'ils incluent les constructions et les infrastructures.

Cette comparaison 62 entre les images radar étiquetées (notamment avec la position de l'appareil) et les images de références permet, pour chaque aéronef A1, ... AN, d'estimer 63 le biais entre l'image prise par le senseur radar et le point de vue de l'aéronef projeté dans les images de référence, par exemple dans le modèle numérique de terrain. Le biais principal est lié au plan de pose du senseur radar et il conduit à une erreur angulaire systématique par rapport à un repère normalisé lié aux axes de l'aéronef. Le croisement des données relativement à plusieurs pistes améliore l'estimation de cette erreur systématique qui peut alors être finement corrigée.

Avantageusement, l'invention permet de réaliser une base de données collective pour l'apprentissage des réseaux de neurones. On obtient ainsi un ensemble de données plus important qui améliore la qualité de l'apprentissage, afin de parvenir à une bonne précision de positionnement des pistes par rapport aux aéronefs. En particulier, un appareil atterrissant pour la première fois sur une piste bénéficie de l'expérience collective, tout en prenant en compte les spécificités propres à son capteur.

Avantageusement encore, l'atterrissage au moyen d'un dispositif selon l'invention est particulièrement robuste aux variations ponctuelles de l'environnement, par exemple la présence de véhicules ou de végétation saisonnière, qui posent des problèmes à des algorithmes figés. En outre l'invention s'adapte aux variations pérennes de l'environnement, telles que des nouvelles constructions ou infrastructures par exemple, en intégrant ces éléments dans la base d'apprentissage.

## Revendications

1. Procédé d'apprentissage d'un réseau de neurones embarqué dans un aéronef (A1) pour l'aide à l'atterrissage dudit aéronef sur au moins une piste donnée (P1), ledit réseau de neurones établissant le positionnement dudit aéronef par rapport à ladite piste, ledit procédé utilisant une flotte d'aéronefs étant équipé au moins d'un senseur radar (1) et comportant au moins :
- Une étape de collecte collective d'images radar par un ensemble d'aéronefs (A₁, ... A_{N}) de ladite flotte, lesdites images radar étant obtenues par les senseurs radar desdits aéronefs (A₁, ... A_{N}) en phases d'atterrissage nominales sur ladite piste, étape dans laquelle chaque image collectée par un aéronef est étiquetée avec au moins une information de position de ladite piste (P1) par rapport audit aéronef, ladite image étiquetée étant envoyée (42) vers une base de données partagée (10, 41) et stockée dans ladite base de données ;
**caractérisé en ce qu'**il comporte :
- Une étape d'apprentissage par un réseau de neurones (3) de ladite piste à partir des images étiquetées stockées dans ladite base de données partagée (41, 10), en fin de ladite étape ledit réseau de neurone (3) étant entraîné ;
- Une étape d'envoi (43) dudit réseau de neurones entraîné vers au moins un desdits aéronefs (A₁) ;
chaque image étiquetée comporte l'identification de l'aéronef ayant émis ladite image :
- les images radar étant entachées d'un biais propre à l'installation dudit senseur radar (1) sur chaque aéronef, ledit biais est estimé (51) pour chaque image radar avant son stockage dans ladite base de données (10), le biais estimé étant stocké avec ladite image ;
- le réseau de neurones entraîné étant transmis à un aéronef donné avec le biais estimé propre à cet aéronef.

2. Procédé selon la revendication 1, **caractérisé en ce que** ledit réseau de neurones transmet à un moyen d'affichage (5) et/ou de commande la trajectoire dudit aéronef.

3. Procédé selon l'une quelconque des revendications précédentes, **caractérisé en ce que** ladite base de données (41, 10) comporte des images radar étiquetées propres à plusieurs pistes d'atterrissage, les images étiquetées comportant identification de la piste imagée.

4. Procédé selon l'une quelconque des revendications précédentes, **caractérisé en ce que** l'estimation dudit biais pour un aéronef donné (A₁) et pour une piste donnée est réalisée par comparaison entre au moins une image radar obtenue par le senseur radar (1) équipant ledit aéronef et une image de référence de ladite piste et de son environnement.

5. Procédé selon la revendication 4, **caractérisé en ce que** ladite image de référence est constituée par un modèle numérique de terrain.

6. Procédé selon l'une quelconque des revendications précédentes, **caractérisé en ce que** les moyens de transmission desdites images étiquetées entre un aéronef et ladite base de données (41, 10) se font au moyen du senseur radar (1) équipant ledit aéronef, les transmissions étant réalisées par modulation des données formant lesdites images sur l'onde radar.

7. Procédé selon l'une quelconque des revendications précédentes, **caractérisé en ce que**, pour un aéronef porteur dudit senseur radar (1), l'étiquetage desdites images comporte au moins l'une des indications suivantes :
- Date d'acquisition de l'image relativement au moment du toucher dudit porteur sur les pistes ;
- Localisation dudit porteur au moment de la prise d'image :
Absolue : position GPS ;
Relative par rapport à la piste : centrale inertielle ;
- Altitude dudit porteur ;
- Attitude dudit porteur ;
- Vecteur vitesse dudit porteur (obtenu par ledit senseur radar en fonction de sa vitesse par rapport au sol) ;
- Vecteur accélération dudit porteur (obtenu par ledit senseur radar en fonction de sa vitesse par rapport au sol) ;
- Position, relativement audit porteur, de la piste et de structures de référence obtenue par des moyens optiques à localisation précise.

8. Procédé selon l'une quelconque des revendications précédentes, **caractérisé en ce que** ladite base de données (41, 10) est mise à jour tout au long des atterrissages nominaux effectués par lesdits aéronefs sur au moins ladite piste.

9. Serveur **caractérisé en ce qu'**il comporte une base de données (10) pour l'apprentissage d'un réseau de neurones embarqué pour la mise en œuvre du procédé selon l'une quelconque des revendications précédentes, ledit serveur étant apte à communiquer avec des aéronefs (A₁, ... A_{N}).

10. Serveur selon la revendication 11, **caractérisé en ce que** ledit réseau de neurones est entraîné (300) dans ledit serveur, le réseau entraîné étant transmis à au moins un desdits aéronefs.

## Patentansprüche

1. Lernverfahren eines Neuronennetzes an Bord eines Luftfahrzeugs (A₁) für die Landehilfe des Luftfahrzeugs auf mindestens einer gegebenen Piste (P1), wobei das Neuronennetz die Positionierung des Luftfahrzeugs in Bezug auf die Piste einrichtet, wobei das Verfahren eine Flotte von Luftfahrzeugen nutzt, die zumindest mit einem Radarsensor (1) ausgerüstet sind und mindestens folgendes umfassen:
- einen Schritt des gemeinsamen Erfassens von Radarbildern durch eine Gruppe von Luftfahrzeugen (A₁, ... A_{N}) der Flotte, wobei die Radarbilder durch die Radarsensoren der Luftfahrzeuge (A₁, ... A_{N}) in nominellen Landephasen auf der Piste erhalten werden, bei welchem Schritt jedes von einem Luftfahrzeug erfasste Bild mit mindestens einer Positionsinformation der Piste (P1) in Bezug auf das Luftfahrzeug markiert wird, wobei das markierte Bild an eine gemeinsam genutzte Datenbank (10, 41) geschickt (42) und in der Datenbank gespeichert wird;
**dadurch gekennzeichnet, dass** es umfasst:
- einen Schritt zum Lernen der Piste durch ein Neuronennetz (3) anhand der markierten, in der gemeinsam genutzten Datenbank (41, 10) gespeicherten Bilder, wobei das Neuronennetz (3) am Ende des Schritts trainiert wird;
- einen Schritt des Sendens (43) des trainierten Neuronennetzes an mindestens eines der Luftfahrzeuge (A₁);
wobei jedes markierte Bild die Identifikation des Luftfahrzeugs umfasst, das das Bild ausgesendet hat;
- wobei die Radarbilder mit einem dem Einbau des Radarsensors (1) an jedem Luftfahrzeug eigenen Bias behaftet sind, wobei der Bias (51) für jedes Radarbild vor dessen Speicherung in der Datenbank (10) geschätzt wird, wobei der geschätzte Bias mit dem Bild gespeichert wird;
- wobei das trainierte Neuronennetz an ein gegebenes Luftfahrzeug mit dem diesem Luftfahrzeug eigenen geschätzten Bias übertragen wird.

2. Verfahren nach Anspruch 1, **dadurch gekennzeichnet, dass** das Neuronennetz die Flugbahn des Luftfahrzeugs an ein Anzeigemittel (5) und/oder Steuermittel überträgt.

3. Verfahren nach einem der vorhergehenden Ansprüche, **dadurch gekennzeichnet, dass** die Datenbank (41, 10) markierte Radarbilder, die mehreren Landepisten eigen sind, umfasst, wobei die markierten Bilder die Identifikation der abgebildeten Piste umfassen.

4. Verfahren nach einem der vorhergehenden Ansprüche, **dadurch gekennzeichnet, dass** die Schätzung des Bias für ein gegebenes Luftfahrzeug (A₁) und für eine gegebene Piste durch Vergleich zwischen mindestens einem von dem Radarsensor (1), mit dem das Luftfahrzeug ausgerüstet ist, erhaltenen Radarbild und einem Referenzbild der Piste und ihrer Umgebung realisiert wird.

5. Verfahren nach Anspruch 4, **dadurch gekennzeichnet, dass** das Referenzbild aus einem numerischen Geländemodell besteht.

6. Verfahren nach einem der vorhergehenden Ansprüche, **dadurch gekennzeichnet, dass** die Übertragungsmittel der markierten Bilder zwischen einem Luftfahrzeug und der Datenbank (41, 10) mittels des Radarsensors (1), mit dem das Luftfahrzeug ausgerüstet ist, gebildet werden, wobei die Übertragungen durch Modulation der Daten, die die Bilder auf der Radarwelle bilden, durchgeführt werden.

7. Verfahren nach einem der vorhergehenden Ansprüche, **dadurch gekennzeichnet, dass** für ein Luftfahrzeug, das Träger für den Radarsensor (1) ist, die Markierung der Bilder mindestens eine der folgenden Angaben umfasst:
- Erfassungsdatum des Bildes relativ zu dem Moment, in dem der Träger die Piste berührt;
- Lokalisierung des Trägers im Moment der Aufnahme des Bildes:
^{∗} absolute Position - GPS;
^{∗} relativ in Bezug auf die Piste: Trägheitsnavigationsleitwerk;
- Höhe des Trägers;
- Fluglage des Trägers;
- Geschwindigkeitsvektor des Trägers (von dem Radarsensor in Abhängigkeit von seiner Geschwindigkeit in Bezug auf den Boden erhalten);
- Beschleunigungsvektor des Trägers (von dem Radarsensor in Abhängigkeit von seiner Geschwindigkeit in Bezug auf den Boden erhalten);
- Position der Piste, relativ zum Träger, und von Referenzstrukturen, die von optischen Mitteln zur genauen Lokalisierung erhalten wurde.

8. Verfahren nach einem der vorhergehenden Ansprüche, **dadurch gekennzeichnet, dass** die Datenbank (41, 10) während der gesamten nominellen Landungen, die durch die Luftfahrzeuge auf der mindestens einen Piste erfolgen, stets aktualisiert wird.

9. Server, **dadurch gekennzeichnet, dass** er eine Datenbank (10) zum Lernen eines Neuronennetzes an Bord zur Anwendung des Verfahrens nach einem der vorhergehenden Ansprüche umfasst, wobei der Server in der Lage ist, mit den Luftfahrzeugen (A₁, ... A_{N}) zu kommunizierten.

10. Server nach Anspruch 11, **dadurch gekennzeichnet, dass** das Neuronennetz in dem Server trainiert wird (300), wobei das trainierte Netz an mindestens eines der Luftfahrzeuge übertragen wird.

## Claims

1. A learning method for a neural network embedded in an aircraft (A1) for assisting in the landing of said aircraft on at least one given runway (P1), said neural network establishing the positioning of said aircraft relative to said runway, said method using a fleet of aircraft being equipped at least with one radar sensor (1) and having at least:
- a step of collective collection of radar images by a set of aircraft (A₁, ..., A_{N}) of said fleet, said radar images being obtained by the radar sensors of said aircraft (A₁, ..., A_{N}) in nominal landing phases on said runway, in which step each image collected by an aircraft is labelled with at least a piece of information on the position of said runway (P1) relative to said aircraft, said labelled image being sent (42) to a shared database (10, 41) and stored in said database;
**characterised in that** in has:
- a step of learning, by a neural network (3) of said runway, from the labelled images stored in said shared database (41, 10), said neural network (3) being trained at the end of said step;
- a step of sending (43) said trained neural network to at least one of said aircraft (A₁);
each labelled image has the identification of the aircraft having transmitted said image:
- the radar images being affected by a bias specific to the installation of said radar sensor (1) on each aircraft, said bias is estimated (51) for each radar image before it is stored in said database (10), the estimated bias being stored with said image;
- the trained neural network being transmitted to a given aircraft with the estimated bias specific to that aircraft.

2. The method according to claim 1, **characterised in that** said neural network transmits, to a display and/or control means (5), the trajectory of said aircraft.

3. The method according to either one of the preceding claims, **characterised in that** said database (41, 10) has labelled radar images specific to several landing runways, the labelled images having identification of the imaged runway.

4. The method according to any one of the preceding claims, **characterised in that** the estimation of said bias for a given aircraft (A₁) and for a given runway is produced by comparison between at least one radar image obtained by the radar sensor (1) with which said aircraft is equipped and a reference image of said runway and of its environment.

5. The method according to claim 4, **characterised in that** said reference image consists of a digital terrain model.

6. The method according to any one of the preceding claims, **characterised in that** the means for transmitting said labelled images between an aircraft and said database (41, 10) are made by means of the radar sensor (1) with which said aircraft is equipped, the transmissions being performed by modulation of the data forming said images on the radar wave.

7. The method according to any one of the preceding claims, **characterised in that**, for an aircraft carrying said radar sensor (1), the labelling of said images has at least one of the following indications:
- date of acquisition of the image relative to the moment of touchdown of said carrier on the runways;
- location of said carrier at the moment of image capture:
^{∗} absolute: GPS position;
^{∗} relative with respect to the runway: inertial unit;
- altitude of said carrier;
- attitude of said carrier;
- speed vector of said carrier (obtained by said radar sensor as a function of its ground speed);
- acceleration vector of said carrier (obtained by said radar sensor as a function of its ground speed);
- position, relative to said carrier, of the runway and of reference structures obtained by accurate location optical means.

8. The method according to any one of the preceding claims, **characterised in that** said database (41, 10) is updated throughout the nominal landings performed by said aircraft on at least said runway.

9. A server, **characterised in that** it has a database (10) for the learning of a neural network embedded for the implementation of the method according to any one of the preceding claims, said server being capable of communicating with aircraft (A₁, ..., A_{N}).

10. The server according to claim 11, **characterised in that** said neural network is trained (300) in said server, the trained network being transmitted to at least one of said aircraft.
